# EUROPÄISCHE PATENTSCHRIFT

(11) **EP 1 552 576 B1**
(45) Veröffentlichungstag und Bekanntmachung des Hinweises auf die Patenterteilung: **13.07.2011**
(21) Anmeldenummer: 03753542.4
(22) Anmeldetag: 11.10.2003
(51) Int. Cl.: H01M 8/14

(54) **Grüne Elektrolytmatrix und Verfahren zur Herstellung einer Elektrolytmatrix**
Green electrolyte matrix and method for the production of an electrolyte matrix
Matrice électrolytique verte et prcédé de production de cette matrice électrolytique

(30) Priorität: 15.10.2002 DE 10247997
(43) Veröffentlichungstag der Anmeldung: 13.07.2005
(73) Patentinhaber: MTU Onsite Energy GmbH, 85521 Ottobrunn (DE)
(72) Erfinder: BEDNARZ, Marc, 82024 Taufkirchen (DE); HILKE, Birgit, 85464 Neufinsing (DE)
(74) Vertreter: Winter, Josef
(86) Internationale Anmeldenummer: PCT/EP2003/011284
(87) Internationale Veröffentlichungsnummer: WO 2004/036681

(56) Entgegenhaltungen:
- WO-A-01/70626
- DE-A- 10 060 052
- US-A- 4 480 017
- US-A- 5 595 832
- PATENT ABSTRACTS OF JAPAN Bd. 0124, Nr. 35 (E-683), 16. November 1988 (1988-11-16) & JP 63 170863 A (MATSUSHITA ELECTRIC IND CO LTD), 14. Juli 1988 (1988-07-14)

## Beschreibung

Die Erfindung betrifft eine grüne Elektrolytmatrix bestehend aus einem Matrixmaterial, das eine oder mehrere Lithiumverbindungen, Aluminiumoxid und ein Carbid enthält, sowie ein Verfahren zur Herstellung einer Elektrolytmatrix.

Zur Erzeugung von elektrischer Energie mittels Brennstoffzellen ist üblicherweise eine größere Anzahl von Brennstoffzellen in Form eines Stapels angeordnet, wobei die Brennstoffzellen jeweils eine Anode, eine Kathode und eine dazwischen angeordnete Elektrolytmatrix aufweisen. Die einzelnen Brennstoffzellen sind jeweils durch Bipolarplatten voneinander getrennt und elektrisch kontaktiert, und an den Anoden und den Kathoden sind jeweils Stromkollektoren zum elektrischen Kontaktieren derselben vorgesehen, und um jeweils das Brenngas bzw. das Kathodengas an diesen Elektroden vorbeizuführen. Im Randbereich von Anode, Kathode und Elektrolytmatrix sind jeweils Dichtungselemente vorgesehen, welche eine seitliche Abdichtung der Brennstoffzellen und damit des Brennstoffzellenstapels gegen ein Austreten von Anoden- und Kathodenmaterial bzw. Elektrolytmaterial der Matrix bilden. Der in der porösen Matrix fixierte Schmelzelektrolyt besteht typischerweise aus binären oder ternären Alkalikarbonatschmelzen. Im Betrieb erreichen Schmelzkarbonatbrennstoffzellen typischerweise Arbeitstemperaturen von 600 bis 650° C.

Das Matrixmaterial der Elektrolytmatrix hat eine Anzahl von Aufgaben zu leisten. So dient die Matrix zum einen als Speicher und Trägermaterial für den Elektrolyten, wobei ein definiertes hochporöses Gefüge der Matrix Voraussetzung für ein hohes Speichervermögen ist. Weiterhin dient die Matrix der elektrischen Isolierung der benachbarten Brennstoffhalbzellen und der Abtrennung von deren Gasräumen. Eine weitere durch die Elektrolytmatrix zu erfüllende Anforderung ist, dass diese in der Lage sein muss, auf Grund von unterschiedlichen thermischen Ausdehnungskoeffizienten der Elektrolytmatrix und der diese umgebenden metallischen Komponenten der Brennstoffzelle bzw. des Brennstoffzellenstapels, insbesondere von seitlichen Dichtungselementen induzierte thermische Zugspannungen auszuhalten. Solche Zugspannungen können insbesondere beim Anfahren der Brennstoffzellen eine Rissbildung in der Matrix und damit eine Verminderung von Leistung und Lebensdauer nach sich ziehen.

Aus der DE 100 60 052 A1 sind eine Elektrolytmatrix, insbesondere für eine Schmelzkarbonatbrennstoffzelle, und ein Verfahren zu deren Herstellung bekannt, wobei das Matrixmaterial eine oder mehrere Lithiumverbindungen, Aluminiumoxid und eine oder mehrere Zirkonverbindungen enthält. Beim Anfahren der Brennstoffzelle erfährt das Matrixmaterial eine Volumenzunahme, wodurch eine Rissbildung der Matrix durch unterschiedliche thermische Ausdehnungskoeffizienten von Matrix und diese umgebenden metallischen Komponenten ausgeschlossen werden soll. Dies geschieht durch Synthetisieren des Matrixmaterials beim Anfahren der Brennstoffzelle unter Volumenzunahme, wobei Lithiumaluminat und Lithiumzirkonat entstehen. Die bekannte grüne Elektrolytmatrix enthält Zirkoncarbid, um eine Volumenzunahme beim Anfahren der Brennstoffzelle zu erreichen. Ein Nachteil der bekannten Matrix ist es, dass sie sowohl im "grünen" Zustand, also vor dem Synthetisieren durch das Anfahren der Brennstoffzelle, wie auch im synthetisierten, d.h. gesinterten Zustand, nicht die gewünschte hohe Festigkeit aufweist. Ein weiterer Nachteil ist es, dass das verwendete Zirkoncarbid aufwendig in der Herstellung und teuer ist. Schließlich ist die Lagerungsfähigkeit der bekannten Matrix in "grünem" Zustand beschränkt.

Aus der US 4 480 017 A geht es als bekannt hervor, in der gesinterten Elektrolytmatrix Lithiumtitanat vorzusehen, das der Matrix eine hohe Steifigkeit vermitteln soll.

Aus der DE 199 35 271 C2 ist ein Matrixmaterial für eine Brennstoffzelle, insbesondere eine Schmelzkarbonatbrennstoffzelle, bekannt, welches aus einem Schlickerversatz durch Formgebung und Trocknung herstellbar ist und ein oder mehrere Oxidkeramikpulver, Bindemittel, Plastifizierungsmittel und/oder Entschäumer enthält. Das bekannte

Matrixmaterial enthält weiterhin oxidische sekundäre Nanopartikel in homogener Beimischung und soll hohe Duktiltät bei gleichzeitig hoher Festigkeit bieten.

Aus der DE 40 30 945 A1 ist ein Matrixmaterial für eine Schmelzkarbonatbrennstoffzelle bekannt, welches eine Mischung von Lithiumaluminat und Lithiumzirkonat enthält.

Schließlich ist aus der US 4 079 171 eine Schmelzkarbonatbrennstoffzelle bekannt, bei der die Matrix hauptsächlich Lithiumaluminat in kristalliner Struktur enthält.

Die Aufgabe der Erfindung ist es, eine grüne Elektrolytmatrix, insbesondere für eine Schmelzkarbonatbrennstoffzelle, anzugeben, welche in grünem und gebranntem Zustand eine hohe Festigkeit aufweist, in grünem Zustand gut lagerungsbeständig und kostengünstig herstellbar ist. Weiterhin soll durch die Erfindung ein Verfahren zur Herstellung einer Elektrolytmatrix angegeben werden.

Durch die Erfindung wird eine Elektrolytmatrix, insbesondere für eine Schmelzkarbonatbrennstoffzelle, in grünem Zustand bestehend aus einem Matrixmaterial, das eine oder mehrere Lithiumverbindungen, Aluminiumoxid und ein Carbid enthält, geschaffen. Erfindungsgemäß ist es vorgesehen, dass das Matrixmaterial in Kombination Lithiumkarbonat, Aluminiumoxid und Titancarbid enthält.

Ein Vorteil der erfindungsgemäßen grünen Elektrolytmatrix ist es, dass während des Anfahrens und beim Betrieb der Brennstoffzelle das Lithiumkarbonat zusammen mit dem Aluminiumoxid vollständig zu Lithiumaluminat synthetisieren kann. Hierdurch ergibt sich eine größere Festigkeit und eine verbesserte Lagerbeständigkeit, insbesondere im "grünen" Zustand gegenüber anderen Matrixmaterialien, die Lithiumverbindungen enthalten. Die Verwendung von Titancarbid führt zu einer überraschend signifikanten Erhöhung der Festigkeit der Elektrolytmatrix im gebrannten Zustand.

Gemäß einer bevorzugten Weiterbildung der Erfindung ist es vorgesehen, dass das grüne Matrixmaterial außerdem Aluminiumhydroxid enthält. Dieses dient als Sinterhilfsmittel und bewirkt eine Erhöhung der Bruchfestigkeit der Matrix.

Weiterhin kann das Matrixmaterial nanoskaliges Sekundärkom enthalten.

Das nanoskalige Sekundärkom kann eines oder mehrere von ZrO₂, SiO₂, Al₂O₃, TiO₂ sein.

Weiterhin wird durch die Erfindung ein Verfahren zur Herstellung einer Elektrolytmatrix, insbesondere für eine Schmelzkarbonatbrennstoffzelle, aus einem Matrixmaterial, das eine oder mehrere Lithiumverbindungen, Aluminiumoxid und ein Carbid enthält, geschaffen. Erfindungsgemäß ist es vorgesehen, dass das Matrixmaterial der grünen Elektrolytmatrix in Kombination Lithiumcarbonat, Aluminiumoxid und Titancarbid enthält, dass die Elektrolytmatrix in grünem Zustand in die Brennstoffzelle eingebaut und beim Anfahren der Brennstoffzelle synthetisiert wird.

Ein wesentlicher Vorteil des erfindungsgemäßen Verfahrens besteht in der Möglichkeit der vollständigen Synthetisierung des Matrixmaterials. Da für das erfindungsgemäße Verfahren Rohstoffe vorgesehen sind, die kommerziell kostengünstig erhältlich sind und bereits in der erforderlichen Feinheit vorliegen, kommt das Verfahren ohne einen zusätzlichen aufwendigen Mahlprozess aus.

Gemäß einer vorteilhaften Weiterbildung des erfindungsgemäßen Verfahrens enthält das Matrixmaterial weiterhin Aluminiumhydroxid. Das Aluminiumhydroxid dient bei einer späteren Synthetisierung des Matrixmaterials als Sinterhilfsmittel und bewirkt eine Erhöhung der Bruchfestigkeit der Matrix.

Weiterhin kann das Matrixmaterial nanoskaliges Sekundärkom enthalten.

Das nanoskalige Sekundärkorn kann eines oder mehrere von ZrO₂, SiO₂, Al₂O₃, TiO₂ sein.

Gemäß einer besonders bevorzugten Ausführungsform des erfindungsgemäßen Verfahrens wird das Matrixmaterial in feinpulvriger Form mit einem Dispersions- und Lösemittel, insbesondere Wasser, zu einem Matrixschlicker angesetzt und der Matrixschlicker geformt und getrocknet.

Der Feststoffgehalt des Matrixschlickers kann 50 bis 80%, vorzugsweise 60 bis 70% betragen. Ein Feststoffgehalt des Matrixschlickers in der genannten Höhe, insbesondere von 60 bis 70% ist vorteilhaft in Hinblick auf die anschließende Trocknung der geformten Matrix. Je höher der Feststoffgehalt des Schlickers ist, desto geringer ist eine Neigung zur Hautbildung und desto höher ist die Qualität der erhaltenen Matrix. Ein hoher Feststoffgehalt des Schlickers ist auch vorteilhaft in Hinblick auf ein rissfreies Austrocknen der Matrix und damit in Bezug auf eine höhere Festigkeit.

Vorzugsweise erfolgt das Formen des Matrixschlickers durch Gießen, Sprühen, Walzen oder Rakeln.

Vorteilhafterweise wird das Matrixmaterial beim Anfahren der Brennstoffzelle, insbesondere unter Bildung von Lithiumaluminat und Lithiumtitanat synthetisiert.

Das Synthetisieren der Elektrolytmatrix erfolgt vorteilhafterweise insbesondere unter Volumenzunahme.

Im folgenden wird ein Ausführungsbeispiel der Erfindung erläutert:

Gemäß dem Ausführungsbeispiel wird eine Elektrolytmatrix für eine Schmelzkarbonatbrennstoffzelle geschaffen. Die Elektrolytmatrix besteht vor dem Synthetisieren (grüner Zustand) aus einem Matrixmaterial, welches in Kombination Lithiumkarbonat, Aluminiumoxid und Titancarbid als Ausgangsmaterialien enthält. Als Sinterhilfsmittel enthält das Matrixmaterial vorzugsweise weiterhin Aluminiumhydroxid.

Die Herstellung der Elektrolytmatrix erfolgt in der Weise, dass das Matrixmaterial in feinpulvriger Form mit einem Dispersions- und Lösemittel zu einem Matrixschlicker angesetzt und der Matrixschlicker geformt und getrocknet wird. Das Dispersions- und Lösemittel kann Wasser oder ein anderes Dispersions- und Lösemittel sein, insbesondere jedoch ausschließlich oder nicht ausschließlich Wasser.

Der Matrixschlicker wird mit einem Feststoffgehalt von 50 bis 80%, vorzugsweise 60 bis 70% angesetzt. Das Formen des Matrixschlickers kann durch Gießen, Sprühen, Walzen oder Rakeln erfolgen. Nach dem Trocknen liegt die Elektrolytmatrix in "grünem" Zustand vor, in welchem sie zunächst gelagert und/oder transportiert und dann in die Brennstoffzelle eingebaut werden kann. Beim Anfahren der Brennstoffzelle wird die "grüne" Elektrolytmatrix dann synthetisiert, was unter Bildung von Lithiumaluminat und Lithiumtitanat unter Volumenzunahme erfolgt. Vorteilhaft ist unter anderem, dass kein Lithiumaluminat im Ausgangsmaterial der Matrix notwendig ist. Die Reaktion erfolgt nach folgenden Reaktionsgleichungen:

LiCO₃ + TiC + 2O₂ → Li₂TiO₃ + 2CO₂

LiCO₃ + Al₂O₃ → 2LiAlO₂ + CO₂

Zusätzlich zu den genannten Komponenten kann das Matrixmaterial ein nanoskaliges Sekundärkorn enthalten, insbesondere eines oder mehrere von ZrO₂, SiO₂, Al₂O₃, TiO₂.

Nach dem Anfahren der Brennstoffzelle, also im gesinterten bzw. synthetisierten Zustand weist die Elektrolytmatrix eine offene Porosität von 30 bis 70%, vorzugsweise von 50 bis 70% auf. Die Volumenzunahme, unter der das Matrixmaterial beim Anfahren der Brennstoffzelle synthetisiert, beträgt vorzugsweise 2,5 bis 5%, insbesondere 3 bis 4%.

Insbesondere hat sich eine Volumenzunahme, d.h. eine negative Schwindung von -3,5%, und eine offene Porosität von 60% als vorteilhaft erwiesen. In diesem speziellen Fall wurde die Elektrolytmatrix aus Lithiumkarbonat, Aluminiumoxid und Titancarbid als Bestandteile des Matrixmaterials und Aluminiumhydroxid als Sinterhilfsmittel hergestellt.

Die erfindungsgemäße Elektrolytmatrix ist auf einfache Weise aus kommerziell günstig und bereits in der erforderlichen Feinheit erhältlichen Materialien herstellbar, zeigt im "grünen" Zustand wie auch im gesinterten Zustand eine hohe Festigkeit und ist im "grünen" Zustand gut lagerfähig.

## Patentansprüche

1. Grüne Elektrolytmatrix, bestehend aus einem Matrixmaterial, das eine oder mehrere Lithiumverbindungen, Aluminiumoxid und ein Carbid enthält,
**dadurch gekennzeichnet,**
**dass** das Matrixmaterial in Kombination Lithiumkarbonat, Aluminiumoxid und Titancarbid enthält.

2. Elektrolytmatrix nach Anspruch 1,
**dadurch gekennzeichnet,**
**dass** das Matrixmaterial weiterhin Aluminiumhydroxid enthält.

3. Elektrolytmatrix nach Anspruch 1 oder 2,
**dadurch gekennzeichnet,**
**dass** das Matrixmaterial weiterhin ein nanoskaliges Sekundärkom enthält.

4. Elektrolytmatrix nach Anspruch 3,
**dadurch gekennzeichnet,**
**dass** das Matrixmaterial als nanoskaliges Sekundärkorn eines oder mehrere von ZrO₂, SiO₂, Al₂O₃, TiO₂ enthält.

5. Verfahren zur Herstellung einer Elektrolytmatrix für eine Brennstoffzelle, wobei die grüne Elektrolytmatrix aus einem Matrixmaterial, enthaltend in Kombination Lithiumcarbonat, Aluminiumoxid und Titancarbid, hergestellt wird, die grüne Elektrolytmatrix in die Brennstoffzelle eingebaut und beim Anfahren der Brennstoffzelle synthetisiert wird.

6. Verfahren nach Anspruch 5,
**dadurch gekennzeichnet,**
**dass** das Matrixmaterial weiterhin Aluminiumhydroxid enthält.

7. Verfahren nach Anspruch 5 oder 6,
**dadurch gekennzeichnet,**
**dass** das Matrixmaterial weiterhin ein nanoskaliges Sekundärkom enthält.

8. Verfahren nach Anspruch 7,
**dadurch gekennzeichnet,**
**dass** das Matrixmaterial als nanoskaliges Sekundärkom eines oder mehrere von ZrO₂, SiO₂, Al₂O₃, TiO₂ enthält.

9. Verfahren nach einem der Ansprüche 5 bis 8,
**dadurch gekennzeichnet,**
**dass** das Matrixmaterial in feinpulvriger Form mit einem Dispersions- und Lösemittel zu einem Matrixschlicker angesetzt wird, und dass der Matrixschlicker geformt und getrocknet ist.

10. Verfahren nach Anspruch 9,
**dadurch gekennzeichnet,**
**dass** der Feststoffgehalt des Matrixschlickers 50 bis 80% beträgt.

11. Verfahren nach Anspruch 9,
**dadurch gekennzeichnet,**
**dass** der Feststoffgehalt des Matrixschlickers 60 bis 70% beträgt.

12. Verfahren nach Anspruch 9, 10 oder 11,
**dadurch gekennzeichnet,**
**dass** das Formen des Matrixschlickers durch Gießen, Sprühen, Walzen oder Rakeln erfolgt.

13. Verfahren nach Anspruch 5,
**dadurch gekennzeichnet,**
**dass** das Matrixmaterial beim Anfahren der Brennstoffzelle unter Bildung von Lithiumaluminat und Lithiumtitanat synthetisiert wird.

14. Verfahren nach Anspruch 5 oder 13,
**dadurch gekennzeichnet,**
**dass** das Synthetisieren der Elektrolytmatrix unter Volumenzunahme erfolgt.

## Claims

1. Green electrolyte matrix consisting of a matrix material which comprises one or more lithium compounds, aluminium oxide and a carbide, **characterized in that** the matrix material comprises, in combination, lithium carbonate, aluminium oxide and titanium carbide.

2. Electrolyte matrix according to Claim 1, **characterized in that** the matrix material further comprises aluminium hydroxide.

3. Electrolyte matrix according to Claim 1 or 2, **characterized in that** the matrix material further comprises a nanoscale secondary grain.

4. Electrolyte matrix according to Claim 3, **characterized in that** the matrix material comprises as nanoscale secondary grain one or more of ZrO₂, SiO₂, Al₂O₃ and TiO₂.

5. Process for producing an electrolyte matrix for a fuel cell, the green electrolyte matrix being prepared from a matrix material comprising, in combination, lithium carbonate, aluminium oxide and titanium carbide, the green electrolyte matrix being installed in the fuel cell and being synthesized when the fuel cell is started up.

6. Process according to Claim 5, **characterized in that** the matrix material further comprises aluminium hydroxide.

7. Process according to Claim 5 or 6, **characterized in that** the matrix material further comprises a nanoscale secondary grain.

8. Process according to Claim 7, **characterized in that** the matrix material comprises as nanoscale secondary grain one or more of ZrO₂, SiO₂, Al₂O₃ and TiO₂.

9. Process according to any of Claims 5 to 8, **characterized in that** the matrix material is prepared in fine-powder form with a dispersion medium and solvent to form a matrix slip, and **in that** the matrix slip is shaped and dried.

10. Process according to Claim 9, **characterized in that** the solids content of the matrix slip is 50% to 80%.

11. Process according to Claim 9, **characterized in that** the solids content of the matrix slip is 60% to 70%.

12. Process according to Claim 9, 10 or 11, **characterized in that** the shaping of the matrix slip takes place by casting, spraying, rolling or knife coating.

13. Process according to Claim 5, **characterized in that** the matrix material is synthesized when the fuel cell is started up, with formation of lithium aluminate and lithium titanate.

14. Process according to Claim 5 or 13, **characterized in that** the synthesizing of the electrolyte matrix takes place with an increase in volume.

## Revendications

1. Matrice électrolytique à l'état vert, constituée par un matériau de matrice qui contient un ou plusieurs composés du lithium, de l'oxyde d'aluminium et un carbure, **caractérisée en ce que** le matériau de matrice contient du carbonate de lithium, de l'oxyde d'aluminium et du carbure de titane en combinaison.

2. Matrice électrolytique selon la revendication 1, **caractérisée en ce que** le matériau de matrice contient en outre de l'hydroxyde d'aluminium.

3. Matrice électrolytique selon la revendication 1 ou 2, **caractérisée en ce que** le matériau de matrice contient en outre un granulat secondaire d'une taille à l'échelle du nanomètre.

4. Matrice électrolytique selon la revendication 3, **caractérisée en ce que** le matériau de matrice contient, comme granulat secondaire d'une taille à l'échelle du nanomètre, un ou plusieurs parmi ZrO₂, SiO₂, Al₂O₃, TiO₂.

5. Procédé pour la production d'une matrice électrolytique destinée à une pile à combustible, où la matrice électrolytique à l'état vert est produite à partir d'un matériau de matrice, contenant du carbonate de lithium, de l'oxyde d'aluminium et du carbure de titane en combinaison, la matrice électrolytique à l'état vert est montée dans la pile à combustible et synthétisée lors du démarrage de la pile à combustible.

6. Procédé selon la revendication 5, **caractérisé en ce que** le matériau de matrice contient en outre de l'hydroxyde d'aluminium.

7. Procédé selon la revendication 5 ou 6, **caractérisé en ce que** le matériau de matrice contient en outre un granulat secondaire d'une taille à l'échelle du nanomètre.

8. Procédé selon la revendication 7, **caractérisé en ce que** le matériau de matrice contient, comme granulat secondaire d'une taille à l'échelle du nanomètre, un ou plusieurs parmi ZrO₂, SiO₂, Al₂O₃, TiO₂.

9. Procédé selon l'une quelconque des revendications 5 à 8, **caractérisé en ce que** le matériau de matrice sous forme de poudre finement divisée est gâché avec une dispersion et un solvant en une barbotine de matrice et **en ce que** la barbotine de matrice est façonnée et séchée.

10. Procédé selon la revendication 9, **caractérisé en ce que** la teneur en solides de la barbotine de matrice est de 50 à 80%.

11. Procédé selon la revendication 9, **caractérisé en ce que** la teneur en solides de la barbotine de matrice est de 60 à 70%.

12. Procédé selon la revendication 9, 10 ou 11, **caractérisé en ce que** le façonnage de la barbotine de matrice est réalisé par coulage, pulvérisation, laminage ou raclage.

13. Procédé selon la revendication 5, **caractérisé en ce que** le matériau de matrice est synthétisé lors du démarrage de la pile à combustible avec formation d'aluminate de lithium et de titanate de lithium.

14. Procédé selon la revendication 5 ou 13, **caractérisé en ce que** la synthèse de la matrice électrolytique a lieu avec une augmentation de volume.
